(19) Europäisches Patentamt / European Patent Office / Office européen des brevets

(11) **EP 4 249 947 B1**

(12) **EUROPEAN PATENT SPECIFICATION**

(45) Date of publication and mention
of the grant of the patent:
**24.12.2025 Bulletin 2025/52**

(21) Application number: **23164071.5**

(22) Date of filing: **24.03.2023**

(51) International Patent Classification (IPC):
*G01S 7/486* (2020.01)     *G01S 7/497* (2006.01)
*G01S 17/32* (2020.01)     *G01S 17/36* (2006.01)

(52) Cooperative Patent Classification (CPC):
**G01S 17/36; G01S 7/4815; G01S 7/4911;
G01S 7/4917; G01S 7/4918**

(54) **ELECTRO-OPTICAL DISTANCE METER**

ELEKTROOPTISCHER ENTFERNUNGSMESSER

APPAREIL DE MESURE DE DISTANCE ÉLECTRO-OPTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.03.2022 JP 2022049359**

(43) Date of publication of application:
**27.09.2023 Bulletin 2023/39**

(73) Proprietor: **TOPCON CORPORATION**
**Tokyo 174-8580 (JP)**

(72) Inventor: **Yasutoshi, Aoki**
**Itabashi-ku, 174-8580 (JP)**

(74) Representative: **dompatent**
**Partnerschaft von
Patentanwälten und Rechtsanwälten mbB
Deichmannhaus am Dom
Bahnhofsvorplatz 1
50667 Köln (DE)**

(56) References cited:
**JP-A- 2011 013 068     US-A- 4 531 833
US-A1- 2012 013 888**

**Description**

Technical Field

The present invention relates to an electro-optical distance meter, and more particularly to a phase-difference-type electro-optical distance meter.

Background Art

When a distance is measured based on only a distance measurement light with such a phase-difference-type electro-optical distance meter, a temperature phase drift of a light transmission drive circuit and a light reception circuit or a delay in an electric circuit appear as measurement errors. Accordingly, in general, an accurate distance measurement is performed based on a phase difference between a distance measurement light and a reference light. This distance measurement is characterized by making use of a phenomenon that a phase difference changes corresponding to a distance. Assuming a phase difference as $\Delta\phi$, a distance measurement as D, a modulation frequency as f, and C as a speed of light, the phase difference $\Delta\phi$ is expressed by the following formula:

$$\Delta\phi = 4\pi fD/C \quad \text{(formula 1)}$$

Accordingly, the distance D can be obtained by measuring the phase difference $\Delta\phi$. In an actual measurement, modulated light modulated using two or more carrier wave signals of frequencies that are different in magnitude is used, and respective digits of a distance value are determined based on the respective resolutions.

Accordingly, the phase-difference-type electro-optical distance meter includes a shutter that switches a distance measurement path and a reference optical path. However, this method has a drawback where an observation time is prolonged due to switching of the shutter, and a drawback where the measurement of a distance measurement light and the measurement of a reference light cannot be performed simultaneously and hence, a difference is generated between a temperature phase drift due to light receiving/transmitting elements of a light transmitting unit and a light receiving unit and a temperature phase drift of electric parts is generated whereby errors occur. In view of the above, there has been proposed an electro-optical distance meter that does not use a shutter.

As an electro-optical distance meter that does not use a shutter, there has been proposed an electro-optical distance meter disclosed in Patent Literature 1, for example. The electro-optical distance meter disclosed in Patent Literature 1 is configured to include two light emitting elements and two light receiving elements. A light emitted from the first light emitting element is split by a beam splitter, and one split light is incident on the first light receiving element via a distance measurement optical path, and the other split light is incident on the second light receiving element via a first reference optical path. Light emitted from the second light emitting element is split by a beam splitter, and one split light is incident on the second light receiving element via a second reference optical path, and the other split light is incident on the first light receiving element via a third reference optical path.

Then, light that is modulated with two types of signals of a main modulation frequency and an adjacent modulation frequency close to the main modulation frequency is simultaneously transmitted to a distance measurement optical path and first to third reference optical paths from the first and second light emitting elements, the light is simultaneously received by the first and second light receiving elements, a distance measurement optical path and first to third reference optical paths are simultaneously measured, a temperature phase drift in each optical path is cancelled out by calculation performed by an arithmetic operation unit so that measurement errors are reduced. Further background art for the present invention is described in Patent Literature 2.

Citation List

Patent Literature

Patent Literature 1: Japanese Published Unexamined Patent Application No. 2011-013068
Patent Literature 2: US 2012/013888 A1

Summary of Invention

Technical Problem

However, the electro-optical distance meter disclosed in Patent Literature 1 uses two light emitting elements and two light receiving elements, and includes three reference optical paths (optical fibers) and hence, the electro-optical distance meter has a complicated structure. Accordingly, there has been demand for an electro-optical distance meter that does not have a shutter and has a simpler configuration while reducing a temperature phase drift.

The present invention has been made in view of the above-mentioned circumstances, and it is an object of the present invention to provide a phase-difference-type electro-optical distance meter that does not use a shutter for switching a reference optical path and a distance measurement optical path, wherein the electro-optical distance meter has a simple configuration compared to the prior art while reducing a temperature phase drift.

Solution to Problem

The present invention is defined in claim 1.
To achieve the above-mentioned object, according to an aspect of the present invention, there is provided an electro-optical distance meter that includes: a first light emitting element configured to transmit a light modulated with a plurality of main modulation frequencies to a distance measurement optical path along which the light travels back and forth to a target reflection object as a distance measurement light; a second light emitting element configured to transmit a light modulated with adjacent modulation frequencies close to the respective main modulation frequencies to a reference optical path as a reference light; a light receiving element configured to receive the light emitted from the first light emitting element and the light emitted from the second light emitting element; a frequency converter group that is connected to the light receiving element and is configured to convert received light signals based on the distance measurement light and the reference light into intermediate frequency signals; and an arithmetic operation unit configured to measure a distance to the target reflection object based on the intermediate frequency signals, wherein the frequency converter group is constituted of frequency converters the number of which is equal to the number of the main modulation frequencies, signals of local frequencies corresponding to the respective main modulation signals are respectively input to the respective frequency converters, the respective local frequencies are frequencies having values close to both the corresponding main modulation frequencies and the corresponding adjacent modulation frequencies having values close to the main modulation frequencies, each of the frequency converters is configured to generate a distance measurement intermediate frequency signal based on the distance measurement light and a reference intermediate frequency signal based on the reference light, the arithmetic operation unit is configured to calculate the distance to the target reflection object by subtracting the reference intermediate frequency signal from the distance measurement intermediate frequency signal, and the plurality of main modulation frequencies are equal to or less than 10 MHz.

In the electro-optical distance meter according to the above-mentioned aspect, it is preferable that a deviation between each of the main modulation frequencies and the local frequency corresponding to each of the main modulation frequencies is at least 10 times larger than a deviation between each of the adjacent modulation frequencies and the main modulation frequency close to the each of the adjacent modulation frequencies.

In the electro-optical distance meter according to the above-mentioned aspect, the electro-optical distance meter further includes: an amplifier configured to amplify the received light signal and to input the received input signal to the frequency converter group; and a received light amount adjustment means configured to adjust a received light amount level detected by the light receiving element, wherein an amplitude of the amplifier be set to a value lower than a proper value at which a level of the distance measurement intermediate frequency signal becomes a minimum magnitude that satisfies a reachable limit flight distance of the distance measurement light, and the received light amount adjustment means be set such that, in a state where the amplitude is set lower than the proper value, the level of the distance measurement intermediate frequency signal is set to a value at which the level of the distance measurement intermediate frequency signal becomes the minimum magnitude that satisfies the reachable limit flight distance.

In the electro-optical distance meter according to the above-mentioned aspect, it is preferable that the first and second light emitting elements be formed of a laser diode respectively, the first light emitting element be configured to transmit, in addition to the plurality of main modulation frequencies, a light modulated with a high-frequency main modulation frequency that is higher in frequency than the plurality of main modulation frequencies to the distance measurement path, the second light emitting element be configured to transmit, in addition to the adjacent modulation frequencies close to the plurality of main modulation frequencies, a light modulated with a high-frequency adjacent modulation frequency close to the high-frequency main modulation frequency to the reference optical path, and the electro-optical distance meter be configured such that neither a distance measurement signal based on the distance measurement light modulated with the high-frequency main modulation frequency nor a distance measurement signal based on the reference light modulated with the high-frequency adjacent modulation frequency is input to the frequency converter group.

Advantageous effects of Invention

According to the electro-optical distance meter of the above-mentioned aspect, it is possible to allow the electro-optical distance meter without using a shutter to have a simpler configuration than the prior art while reducing a temperature phase drift.

Brief Description of Drawings

FIG. 1 is a block diagram of an electro-optical distance meter according to a first embodiment of the present invention.
FIG. 2 is a view illustrating a variable neutral density filter that is a received light amount adjustment means of the electro-optical distance meter for a distance measurement light.
FIGS. 3A to 3C are diagrams illustrating received light signal spectra of the electro-optical distance meter, describing the enhancement of an S/N (signal/noise) ratio set by an amplifier and the received light amount adjustment means.
FIG. 4 is a table illustrating an example of a main modulation frequency, an adjacent modulation frequency, a local frequency, and an intermediate frequency of the same electro-optical distance meter.
FIG. 5 is a block diagram of an electro-optical distance meter according to a modification of the embodiment.
Description of Embodiments

Hereinafter, a preferred embodiment of the present invention is described hereinafter with reference to drawings. However, the present invention is not limited to such a configuration. Further, in the respective embodiments, constitutional elements having identical mechanical configurations are denoted by the same reference signs and overlapping description of these constitutional elements is omitted as appropriate.

[First embodiment]

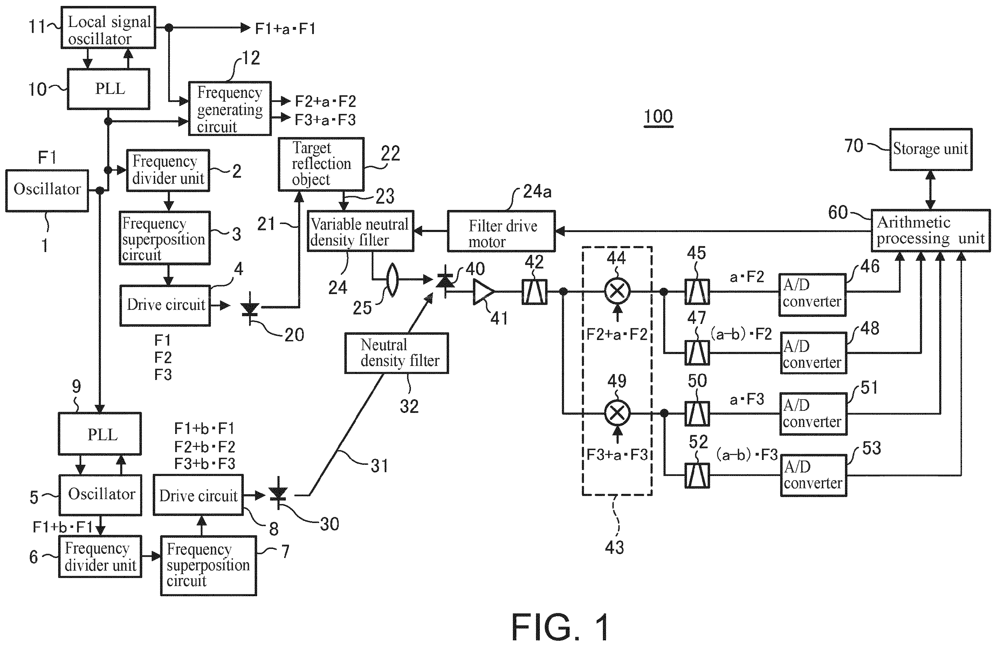

FIG. 1 is a block diagram of an electro-optical distance meter 100 according to a first embodiment. The electro-optical distance meter 100 is a phase-difference-type electro-optical distance meter that calculates a distance to a target reflection object 22 based on a phase difference between a distance measurement light and a reference light. The electro-optical distance meter 100 includes, mainly, two light emitting elements (that is, a first light emitting element 20 and a second light emitting element 30), a light receiving element 40, an arithmetic operation unit 60, and a storage unit 70.

The first light emitting element 20 and the second light emitting element 30 are formed of a laser diode respectively, for example, and emit a visible laser beam or an infrared laser beam. The first light emitting element 20 emits a light that is modulated with a plurality of main modulation frequencies $F1$, $F2$, $F3$. The second light emitting element 30 emits a light that is modulated with adjacent modulation frequencies $F1+b·F1$, $F2+b·F2$, $F3+b·F3$ that are respectively close to the respective main modulation frequencies $F1$, $F2$, $F3$. Here, a coefficient b satisfies $0<b$, and $|b|$ is a sufficiently small value with respect to 1 ($|b|<< 1$).

The main modulation frequencies $F1$, $F2$, $F3$ are in the descending order of frequencies ($F1>F2>F3$). For example, the frequency $F1$ is higher than 10 MHz, the frequency $F2$ is within a range of 10 MHz to 1 MHz, and frequency $F3$ is equal to or less than 1 MHz. Further, it is preferable that the deviations $|b|·F1$, $|b|·F2$, $|b|·F3$ between the respective main modulation frequencies $F1$, $F2$, $F3$ and the adjacent modulation frequencies $F1+b·F1$, $F2+b·F2$, $F3+b·F3$ that are respectively close to the respective main modulation frequencies $F1$, $F2$, $F3$ are several tens kHz to several kHz.

The light receiving element 40 is, for example, an avalanche photo diode, and outputs a received distance measurement light and a reference light as electric signals (a distance measurement signal and a reference signal).

The arithmetic operation unit 60 is a control arithmetic operation unit that includes, for example, at least one processor (for example, a central processing unit (CPU)) and at least one memory (static random access memory (SRAM), a dynamic RAM (DRAM), etc.). The arithmetic operation unit 60 realizes its functions by allowing the processor to read out a program into the memory for executing its functions and to execute the program.

At least a portion of the arithmetic operation unit 60 may be formed of hardware such as a complex programmable logic device (CPLD), a field programmable gate array (FPGA). Further, in a case where these CPLD and FPGA are used, circuits, etc., that are formed on these elements realize their functions.

The arithmetic operation unit 60 controls the light emission from the first light emitting element 20 and the second light emitting element 30. The arithmetic operation unit 60 calculates a distance to a target reflection object based on a light reception signal from the light receiving element 40. The detail of the processing is described later.

The storage unit 70 includes a computer readable storage medium such as a flash memory or a hard disk drive. The storage unit 70 stores programs for executing the measurement, the adjustment of a received light amount, the calculation of a distance value, etc., performed by the arithmetic operation unit 60, initial setting data, the measurement data, etc., as described hereinafter.

Hereinafter, the configuration of the electro-optical distance meter 100 and the measurement of a distance are described in detail.

First, in response to an instruction from the arithmetic operation unit 60, an oscillator 1 generates a signal of a main modulation frequency F1. The signal of the main modulation frequency F1 is input to a frequency divider unit 2 and, at the same time, is input to an oscillator 5 and a local signal oscillator 11 via phase locked loops (PLL) 9, 10. The PLLs 9, 10 are used for oscillating the oscillator 5 and the local signal oscillator 11 accurately in synchronization with the main modulation frequency F1.

The frequency divider unit 2 divides the signal of the main modulation frequency F1 so as to generate a signal of a main modulation frequency F2 and a signal of a main modulation frequency F3. The signals of the main modulation frequencies F2 and F3 and the signal of the main modulation frequency F1 are input to a drive circuit 4 via a frequency superposition circuit 3. The first light emitting element 20 is driven by the drive circuit 4, and emits a light modulated with the main modulation frequencies F1, F2 and F3.

The oscillator 5 generates a signal of an adjacent modulation frequency $F1+b \cdot F1$. The signal of the adjacent modulation frequency $F1+b \cdot F1$ is further subjected to frequency division by a frequency divider unit 6 and generates signals of adjacent modulation frequencies $F2+b \cdot F2$ and $F3+b \cdot F3$. The signals of adjacent modulation frequencies $F1+b \cdot F1$, $F2+b \cdot F2$ and $F3+b \cdot F3$ are input to a drive circuit 8 via a frequency superposition circuit 7. The second light emitting element 30 is driven by the drive circuit 8, and emits a light modulated with the adjacent modulation frequencies $F1+b \cdot F1$, $F2+b \cdot F2$ and $F3+b \cdot F3$.

The local signal oscillator 11 generates a signal of a local frequency $F1+a \cdot F1$. Here, a coefficient a satisfies $0<a$, and $|a|$ is a value sufficiently small compared to 1 ($|a|<<1$). The signal of the local frequency $F1+a \cdot F1$ is subjected to frequency division by a frequency generating circuit 12 so that a signal of a local frequency $F2+a \cdot F2$ and a signal of a local frequency $F3+a \cdot F3$ are generated. The signal of the local frequency $F2+a \cdot F2$ and the signal of the local frequency $F3+a \cdot F3$ are, as described later, respectively input to a first frequency converter 44 and a second frequency converter 49. Deviations $|a| \cdot F1$, $|a| \cdot F2$, $|a| \cdot F3$ between the respective main modulation frequencies F1, F2, F3 and the local frequencies $F1+a \cdot F1$, $F2+a \cdot F2$, $F3+a \cdot F3$ corresponding to the respective main modulation frequencies F1, F2, F3 are several hundred kHz to several 10 kHz. Accordingly, the local frequencies $F1+a \cdot F1$, $F2+a \cdot F2$, $F3+a \cdot F3$ become frequencies having values close to both the corresponding main modulation frequencies F1, F2, F3 and the corresponding adjacent modulation frequencies $F1+b \cdot F1$, $F2+b \cdot F2$, $F3+b \cdot F3$.

Particularly, it is preferable that the deviations $|a| \cdot F1$, $|a| \cdot F2$, $|a| \cdot F3$ between the respective main modulation frequencies F1, F2, F3 and the respective local frequencies $F1+a \cdot F1$, $F2+a \cdot F2$, $F3+a \cdot F3$ corresponding to the respective main modulation frequencies F1, F2, F3 are at least 10 times larger than the deviations $|b| \cdot F1$, $|b| \cdot F2$, $|b| \cdot F3$ between the respective main modulation frequencies F1, F2, F3 and the respective adjacent modulation frequencies $F1+b \cdot F1$, $F2+b \cdot F2$, $F3+b \cdot F3$ corresponding to the respective main modulation frequencies F1, F2, F3. That is, it is preferable that $|a|$ satisfies $|a| \geq 10 |b|$. The reason is described later.

A light transmitted from the first light emitting element 20 is reflected on the target reflection object 22 via a distance measurement optical path 21, and reaches the light receiving element 40 via a distance measurement optical path 23.

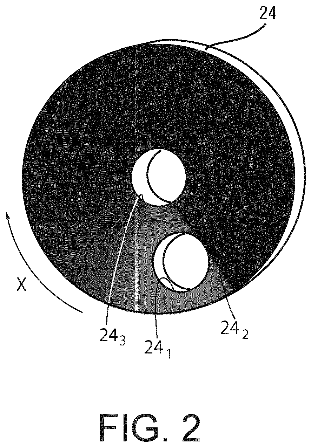

On the distance measurement optical path 23, a variable neutral density filter 24 and a light receiving optical system 25 that form a received light amount adjustment means are disposed in front of the light receiving element 40. The variable neutral density filter 24 is, for example, a thin disk-like neutral density filter, as illustrated in FIG. 2.

The variable neutral density filter 24 has an opening portion $24_1$, and is formed such that filter density is increased continuously in a circumferential direction indicated by an arrow X in FIG. 2 toward another end portion $24_2$ in the circumferential direction from the opening portion $24_1$ so that a light amount attenuation ratio changes from 0 to 100 %. The variable neutral density filter 24 is connected to a rotary shaft of a filter drive motor 24a at a center portion $24_3$ thereof. The variable neutral density filter 24 adjusts a received light amount level of a distance measurement light in such a manner that the filter drive motor 24a is rotatably driven in response to an instruction from the arithmetic processing unit 60 so as to adjust an attenuation ratio of a light that passes through the variable neutral density filter 24.

On the other hand, a light that is transmitted from the second light emitting element 30 reaches the light receiving element 40 via a reference optical path 31.

On the reference optical path 31, a neutral density filter 32 that is a received light amount adjustment means is disposed in front of the light receiving element 40. The neutral density filter 32 is used, for example, in a mode where a neutral density filter having the same configuration as the variable neutral density filter 24 is fixed. Alternatively, a neutral density filter having a fixed density may be used. The neutral density filter 32 adjusts a received light amount level of a reference light by attenuating a reference light at an attenuation ratio set in advance.

The light receiving element 40 is connected to an amplifier 41, and the amplifier 41 is connected to a frequency converter group 43 via a band filter 42. The frequency converter group 43 is constituted of two frequency converters, that is, the first frequency converter 44 and the second frequency converter 49.

A light received by the light receiving element 40 is converted into signals of six frequencies F1, F1+b·F1, F2, F2+b·F2, F3 and F3+b·F3. Signal amplitudes of these signals are amplified by the amplifier 41. Among these signals, neither a main modulation frequency of a high frequency (hereinafter also referred to as high-frequency main modulation frequency) F1 nor an adjacent modulation frequency of a high frequency (hereinafter also referred to as high-frequency adjacent modulation frequency) F1+b·F1 is used in the calculation of a distance value. Accordingly, among the amplified signals, the signals of the frequencies F1 and F1+b·F1 are cancelled out by the band filter 42, and the remaining signals are input to the first frequency converter 44 and the second frequency converter 49 respectively.

A local signal of a local frequency F2+a·F2 is input to the first frequency converter 44 and the frequency multiplication is performed in the first frequency converter 44. A signal obtained after the multiplication is output to a band filter 45 and a band filter 47. A high frequency region is cancelled out by the band filter 45 so that an intermediate frequency signal (distance measurement intermediate frequency signal) of a frequency a·F2 is input to an A/D converter 46. A high frequency region is cancelled out by the band filter 47 so that an intermediate frequency signal (reference intermediate frequency signal) of a frequency (a-b)·F2 is input to an A/D converter 48.

A local signal of a local frequency F3+a·F3 is input to the second frequency converter 49 and frequency multiplication is performed in the second frequency converter 49. A signal obtained after the multiplication is output to a band filter 50 and a band filter 52. A high frequency region is cancelled out by the band filter 50 so that an intermediate frequency signal (distance measurement intermediate frequency signal) of a frequency a·F3 is input to an A/D converter 51. A high frequency region is cancelled out by the band filter 52 so that an intermediate frequency signal (reference intermediate frequency signal) of a frequency (a-b)·F3 is input to an A/D converter 53.

In this manner, the frequency converter group 43 includes the frequency converters the number of which corresponds to the number of the main modulation frequencies that are used in the calculation of a distance value.

In the A/D converters 46, 48, 51, 53, an analog signal is converted to a multi-value digital signal, and a waveform of the signal is transformed into a sinusoidal wave. Accordingly, the arithmetic processing unit 60 can acquire signal amplitude information and phase information. The signal amplitude information and the phase information are used for the calculation of a distance value. Further, signal amplitude information is used for adjusting a received light amount.

The A/D converters 46, 48, 51, 53 are connected to the arithmetic processing unit 60. The arithmetic processing unit 60 analyzes signal amplitudes and phase information of intermediate frequency signals of frequencies a·F2, a·F3, and calculates a distance measurement optical path measured value based on distance measurement lights modulated with the modulation frequencies F2, F3. Further, the arithmetic processing unit 60 calculates a reference optical path measurement value based on reference lights having modulation frequencies F2+b·F2, F3+b·F3 by analyzing the signal amplitudes and the phase information of intermediate frequency signals of frequencies (a-b)·F2, (a-b)·F3. Then, the arithmetic processing unit 60 calculates a distance value to a target reflection object based on respective distance measurement lights of frequencies F2, F3 by subtracting the reference-optical-path measurement value from the distance-measurement-optical-path measurement value.

Here, with respect to the reason why an effect of a temperature phase drift can be reduced in the calculation of a distance value to the target reflection object 22 by the arithmetic processing unit 60 is described. Although temperature phase drifts occurs at both frequencies F2, F3, the reason that an effect of a temperature phase drift can be reduced is the same and hence, the reason is described with respect to the signal of the main modulation frequency F2 as a representative example.

Assume a frequency of an electric signal applied to the first light emitting element 20 as F2 =(1+0)f2, a frequency of an electric signal applied to the second light emitting element 30 as F2+b·F2 =(1+b)f2, and a frequency of a local signal applied to the first frequency converter 44 as F2+a·F2 =(1+a)f2. Here, it is preferable that a condition of a>0 and b>0 be established, and an absolute value |a| is at least 10 times larger than |b| (|a| ≥10 |b|).

The formula of a waveform of the light receiving element 40 becomes the following formula (2).

$$y_1 = y_{APD,LD1} \, cos \left\{ 2\pi f_2 t + \phi_{LD1}(f_2) + \phi_{APD}(f_2) - 2\pi f_2 \frac{2D_0}{c} \right\}$$

$$+ y_{APD,LD2} \, cos \left\{ 2\pi(1+b)f_2 t + \phi_{LD2}((1+b)f_2) + \phi_{APD}((1+b)f_2) - 2\pi(1+b)f_2 \frac{D_1}{c} \right\}$$

$$\text{(formula 2)}$$

In the formula 2, $Y_{APD,LD1}$ is an amplitude of a signal between the first light emitting element 20 and the light receiving element 40, $Y_{APD,LD2}$ is an amplitude of a signal between the second light emitting element 30 and the light receiving element 40, $\phi_{LD1}$ is a temperature phase drift of the first light emitting element 20, $\phi_{LD2}$ is a temperature phase drift of the second light emitting element 30, $\phi_{APD}$ is a temperature phase drift of the light receiving element 40, $2D_0$ is a back-and-forth traveling distance from the electro-optical distance meter to the target reflection object 22, $D_1$ is an optical path length of the reference optical path 31, and c is the speed of light.

Next, the formula of the waveform after the frequency conversion is considered. Assuming a waveform of a local signal of a local frequency (1+a)·F2 that is multiplied by $y_1$ in the first frequency converter 44 is $y_2$, $y_2$ is expressed by the formula 3.

$$y_2 = y_{LO}COS[2\pi(1+a) \ f_2t+\phi] \quad (Formula \ 3)$$

In the formula 3, $y_{LO}$ is an amplitude of the local signal, and $\phi$ is a phase of a local oscillation signal.
Next, in the first frequency converter 44, a waveform $y_3$ of an intermediate frequency signal of the frequency a·F2 based on a distance measurement light that passes through the band filter 45 after $y_1$ is subjected to frequency conversion (multiplication) with $y_2$ is expressed by the formula 4.

$$y_3 = \frac{y_{APD,LD1}y_{LO}}{2}cos\left\{2\pi(af_2)t - \phi_{LD1}(f_2) - \phi_{APD}(f_2) + \phi_{AMP1}(af_2) + 2\pi f_2\frac{2D_0}{c} + \varphi\right\} \quad \text{(formula 4)}$$

In the formula 4, $\phi_{AMP1}$ is a temperature phase drift of the band filter 45.
Next, in the first frequency converter 44, a waveform $y_4$ of an intermediate frequency signal of the frequency (a-b)·F2 based on a reference light that passes through the band filter 47 after $y_1$ is subjected to frequency conversion (multiplication) with $y_2$ is expressed by the formula 5.

$$y_4 = \frac{y_{APD,LD2}y_{LO}}{2}cos\left\{2\pi((a-b)f_2)t - \phi_{LD2}((1+b)f_2) - \phi_{APD}(1+b)(f_2) + \phi_{AMP2}((a-b)f_2) + 2\pi(1+b)f_2\frac{D_1}{c} + \varphi\right\}$$
$$\text{(formula 5)}$$

In the formula 5, $\phi_{AMP2}$ is a temperature phase drift of the band filter 47.
Next, a distance value is obtained. A distance value d is converted to the following general formula (formula 6).

$$d = \theta\frac{c}{2\pi f} \quad \text{(formula 6)}$$

(In the formula 6, $\theta$ is an initial phase obtained by measurement, f is a modulation frequency, and c is the speed of light.)
Assuming a distance measurement optical path measured value that is a phase component of the waveform $y_3$ of an intermediate frequency signal of a frequency $\Delta f2$ based on a distance measurement light as $d_0$, and a reference optical path measured value that is a phase component of the waveform $y_4$ of an intermediate frequency signal of a frequency $2\Delta f2$ based on a reference light as $d_1$, $d_0$ and $d_1$ can be expressed by the following formulas 7, 8 respectively.

$$d_0 = 2D_0 + \frac{c}{2\pi f_2}\{-\phi_{LD1}(f_2) - \phi_{APD}(f_2) + \phi_{AMP1}(af_2) + \varphi\} \quad \text{(formula 7)}$$

$$d_1 = D_1 + \frac{c}{2\pi(1+b)f_2}\{-\phi_{LD2}((1+b)f_2) - \phi_{APD}((1+b)f_2) + \phi_{AMP2}((a-b)f_2) + \varphi\} \quad \text{(formula 8)}$$

In these formulas 7, 8, |b| is sufficiently small with respect to 1 and hence, 1+b is approximated as 1 (1+b ≈ 1). Further, $\phi_{LD1}(f_2)$ is a temperature phase drift of the first light emitting element 20 due to a signal of the frequency F2, $\phi_{LD2}((1+b))f_2)$ is a temperature phase drift of the second light emitting element 30 due to a signal of the frequency F2-$\Delta$f2, $\phi_{APD}(f_2)$ is a temperature phase drift of the light receiving element 40 due to a signal of a frequency F2, $\phi_{APD}((1+b)f_2)$ is a temperature phase drift of the light receiving element 40 by a signal of a frequency F2-$\Delta f_2$. However, it has been known that, in a case where a modulation frequency is less than 10 MHz, a temperature phase drift of the light emitting element and a temperature phase drift of the light receiving element are so small that these temperature phase drifts can be ignored. Accordingly, $\phi_{LD1}(f_2)$, $\phi_{LD2}((1+b)f_2)$, $\phi_{APD}(f_2)$ and $\phi_{APD}((1+b)f_2)$ can be ignored and hence, the formula 7 and the formula 8 can be expressed as described in the following formulas 9, 10.

$$d_0 = 2D_0 + \frac{c}{2\pi f_2}\{+\phi_{AMP1}(af_2) + \varphi\} \quad \text{(formula 9)}$$

$$d_1 = D_1 + \frac{c}{2\pi f_2}\{+\phi_{AMP2}((a-b)f_2) + \varphi\} \quad \text{(formula 10)}$$

By subtracting formula 10 from formula 9, the formula 11 is obtained.

$$d_0 - d_1 = 2D_0 - D_1 + \frac{c}{2\pi f_2}\{\phi_{AMP2}((a-b)f_2) - \phi_{AMP1}(af_2)\} \quad \text{(formula 11)}$$

Using the formula 11, a distance value from the electro-optical distance meter 100 to the target reflection object 22 can be obtained. It is understood from the formula 11 that the temperature phase drifts $\phi_{LD1}$ ($f_2$), $\phi_{LD2}$ (($1+b)f_2$), $\phi_{APD}$ ($f_2$) and $\phi_{APD}((1+b)f_2)$ derived from the first light emitting element 20, the second light emitting element 30 and the light receiving element 40 are cancelled out so that the temperature phase drifts are reduced.

The distance value from the electro-optical distance meter 100 to the target reflection object 22 that is obtained by the formula 11 includes the temperature phase drifts $\phi_{AMP1}$, $\phi_{AMP2}$ derived from the electronic components (the band filters 45, 47) on a light receiving side. In general, it has been known that, with respect to a temperature phase drift that is generated in the elements such as an electronic component, a light emitting element and a light receiving element, the higher the frequency of an applied signal, the larger the temperature phase drift becomes. Temperature phase drifts that occurs in the band filters 45, 47 are temperature phase drifts due to a signal of a low frequency (intermediate frequency) after frequency conversion. Accordingly, the effect of the temperature phase drift is small compared to a temperature phase drift that occurs in a light emitting element and a light receiving element based on a signal of a modulation frequency F1 used in a conventional electro-optical distance meter that uses a high-frequency modulation frequency F1. Accordingly, in the electro-optical distance meter 100, it is possible to reduce the effect of a temperature phase drift by using a modulation frequency of 10 MHz or less that exhibits a small temperature phase drift.

Here, in a case where a condition of $|a| \geq 10|b|$ is established, from the formula 11, as described below, the temperature phase drifts $\phi_{AMP1}$, $\phi_{AMP2}$ derived from the electronic components on a light receiving side (the band filters 45, 47) can be cancelled out. Accordingly, the electro-optical distance meter 100 is particularly advantageous.

In the case where the condition of $|a| \geq 10|b|$ is satisfied, $|b|$ is sufficiently small compared to $|a|$ and hence, the approximation can be realized as expressed in the formula 12.

$$\phi_{AMP2}((a-b)f_2) \fallingdotseq \phi_{AMP1}(af_2) \quad \text{(formula 12)}$$

Due to such approximation, it is possible to modify the formula 11 to the formula 13.

$$d_0 - d_1 = 2D_0 - D_1 \quad \text{(formula 13)}$$

As a result, a distance to a target reflection object can be calculated in a mode where the effect of the temperature phase drifts $\phi_{AMP1}$, $\phi_{AMP2}$ derived from the electronic components (band filters 45, 47) on the light receiving side is cancelled out.

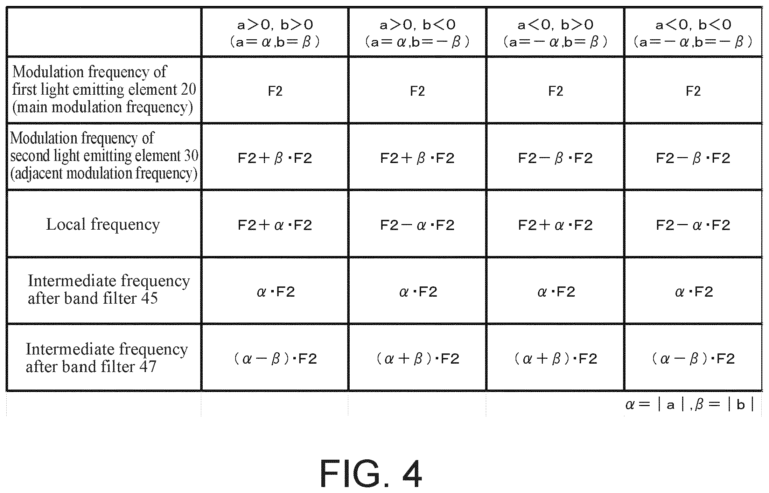

To acquire an effect of reducing the effect of the temperature phase drifts $\phi_{AMP1}$, $\phi_{AMP2}$ derived from the electronic components (band filters 45, 47) on the light receiving side, besides the condition of a>0 and b>0, it is sufficient that any one of a condition of a<0 and b>0, a condition of a>0 and b<0 and a condition of a<0 and b<0 is satisfied. The main modulation frequency, the adjacent modulation frequency, the local frequency and the intermediate frequency that are used in cases where the above-mentioned conditions are satisfied are described in FIG. 4 using $\alpha = |a|$ and $\beta = |b|$. In the above-mentioned conditions, in the case where the condition of $|a| \geq 10|b|$ is satisfied, $|b|$ is sufficiently small compared to $|a|$ and hence, it is possible to perform the following approximation.

$$\alpha \cdot F2 \approx (\alpha - \beta) \cdot F2 \quad \text{(formula 14)}$$

or

$$\alpha \cdot F2 \approx (\alpha + \beta) \cdot F2 \quad \text{(formula 15)}$$

In this manner, according to this embodiment, by allowing two light emitting elements to emit light simultaneously and by using the light that is modulated with the signals of the modulation frequencies of less than 10 MHz (F2, F3), it is possible to calculate a distance measurement value by ignoring the effect of temperature phase drifts that occur in the light emitting element and the light receiving element, particularly, an error that occurs due to the temperature phase drift difference between two light emitting elements.

As a result, from a conventional electro-optical distance meter that does not use a shutter but includes two light emitting elements and two light receiving elements, it is possible to omit the second light receiving element, and an optical fiber between the first light emitting element and the second light receiving element and an optical fiber between the second light emitting element and the first light receiving element. Accordingly, the entire configuration of the electro-optical distance meter can be simplified. Further, since the configuration of the electro-optical distance meter can be simplified, the electro-optical distance meter can be manufactured at a low cost.

Further, according to the electro-optical distance meter 100 of this embodiment, a shutter is not used for switching a distance measurement light and a reference light, initial phases of the respective intermediate frequency signals relating to the distance measurement optical path and the reference optical path can be simultaneously obtained. Accordingly, the distance measurement can be performed at a high speed compared to a conventional shutter-type electro-optical distance meter. Further, since a shutter is not used, the cost of the electro-optical distance meter 100 can be reduced. Still further, conventionally, to reduce a temperature phase drift difference caused by a difference in time of measurement, a power source of a light emitting element during the continuous distance measurement is held on an ON state. On the other hand, according to the electro-optical distance meter 100, the simultaneous distance measurement using the distance measurement optical path and the reference optical path can be realized and hence, the electro-optical distance meter 100 is not affected by the temperature phase drift caused by the difference in time whereby a power source of the light emitting element can be turned on or off each time the distance measurement is performed thus achieving an advantageous effect substantially equal to an advantageous effect of the electro-optical distance meter described in Patent Literature 1 with respect to the saving of electric power.

In the electro-optical distance meter 100, a signal of the frequency F1 is generated by the oscillator 1, and the drive circuit 4 is driven based on the frequencies F1, F2 and F3. However, a received light signal based on the frequency F1 is removed by the band filter 42, and is not used for the calculation of a distance measurement value. As will be described in the modification described later, it is not always essential that the oscillator 1 oscillates at the high frequency F1 larger than 10 MHz. However, in the case where the first light emitting element 20 and the second light emitting element 30 are formed of a laser diode as in the case of this embodiment, by adopting the configuration where the oscillator 1 is oscillated at the high frequency F1 higher than the modulation frequencies F2, F3, the first light emitting element 20 is driven with the main modulation frequency F1, and the second light emitting element 30 is driven with the adjacent modulation frequency F1+b·F1, the configuration is advantageous for stabilizing the phase of the signal.

In general, it has been known that the accuracy of a distance measurement value is increased with the use of a signal of a high modulation frequency. Accordingly, with respect to the electro-optical distance meter 100 of the present embodiment that does not use the high-frequency modulation frequency F1, there may be a case where the accuracy of the distance measurement value becomes lower. In view of the above, in the electro-optical distance meter 100, by setting an amplitude of the amplifier 41 and a received light amount as described below, when necessary, the accuracy substantially equal to the accuracy that is acquired when the main modulation frequency F1 is used can be ensured.

Also in a conventional electro-optical distance meter (for example, see Patent Literature 1, FIG. 4), in the same manner as the electro-optical distance meter 100, a received light signal is amplified by an amplifier, and an amplified signal is used for calculation of a distance value. In a conventional electro-optical distance meter, with respect to an amplitude of an amplifier, depending on the specification of an electro-optical distance meter, a value that becomes a minimum received light amount that satisfies a reachable limit flight distance of a distance measurement light (specifically, a signal level that the count of the A/D converter becomes 1) is set as a proper value. On the other hand, in the electro-optical distance meter 100, an amplitude of the amplifier 41 is set lower than a proper value that becomes the minimum received light amount that satisfies the limit reachable distance. Further, in the electro-optical distance meter 100, an attenuation ratio of the received light amount adjustment means is set smaller than an attenuation ratio of the received light amount adjustment means set under the same condition.

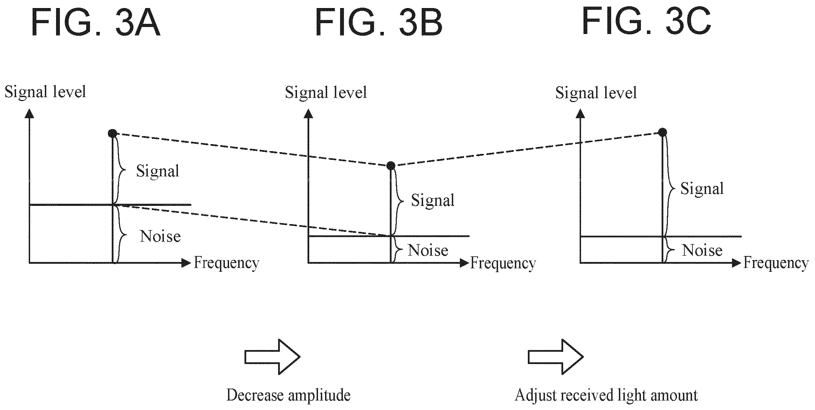

The reason why accuracy is improved by such processing is described hereinafter. FIG. 3A is a graph schematically illustrating a signal spectrum of an intermediate frequency signal based on a distance measurement light in the electro-optical distance meter 100 (for example, an intermediate frequency signal of a frequency Δf2 in FIG 1) in a case where an amplitude of the amplifier 41 is set to a proper value. An amplified intermediate frequency signal includes a signal and a noise. In this case, by setting the amplitude smaller than a proper value, as illustrated in FIG. 3B, the signal and the noise are decreased at the same rate.

In such a state, in order to obtain equivalent proper light amounts of the light receiving signal level input to the A/D converters, an attenuation ratio of the variable neutral density filter 24 is set such that an amount of light that passes through the variable neutral density filter 24 is increased. That is, the attenuation ratio is set such that when an amplitude of the amplifier 41 is lowered to 1/N (N being a natural number) of a proper value, transmissivity of the variable neutral density filter 24 is increased by N times. For example, in a conventional electro-optical distance meter, in a case where a proper light amount is obtained by setting transmissivity of the variable neutral density filter to 9% (that is, the attenuation ratio being 91%) when a proper value of the amplitude is 10 times, to obtain substantially the same light receiving signal level with the amplitude being set to 1 time (1/10), the transmissivity of the variable neutral density filter 24 is set to 90 percent that is 10 times as large as 9 percent (the attenuation ratio being 10% of 10/91 times). By setting the transmissivity of the variable neutral density filter 24 in this manner, although a received light signal level is increased, the level of noise that is generated on a light emitting element side does not change. Further, along with the increase in the received light signal level, the level of the noise generated on a light receiving element side is increased to some extent. However, the level of the noise is negligible compared to the level of the signal. As a result, as illustrated in FIG. 3C, the signal level can be increased without increasing the noise level. Accordingly, a signal/noise ratio (S/N ratio) is increased. As a result, it is possible to improve the accuracy of the electro-optical distance meter 100.

The arithmetic processing unit 60 is configured such that, in the measurement, the filter drive motor 24a is driven corresponding to a detected received light amount (signal levels (magnitudes of signal amplitudes) of intermediate frequency signals output from the A/D converters 46, 51) so that the received light amount takes a maximum value within the input ranges of the A/D converters 46, 51. In the A/D converters 46, 51, a signal amplitude is not measured in a saturation region that exceeds the input range of the measurable signal level. Accordingly, the arithmetic processing unit 60 drives the filter drive motor 24a such that a received light amount becomes a maximum value within the input ranges when the received light amount is larger than the input ranges of the A/D converters 46, 51, and drives the filter drive motor 24a such that the received light amount takes a maximum value within the input ranges when the received light amount is within the input ranges of the A/D converters 46, 51. Further, when the received light amount is smaller than the input ranges of the A/D converters 46, 51, the arithmetic processing unit 60 drives the filter drive motor 24a such that the received light amount becomes a maximum value within the input range. In this case, an attenuation ratio of the light is set lower than a corresponding attenuation ratio in a case where the same variable neutral density filter is used when the amplitude is a proper value.

Further, by lowering the amplitude of the amplifier 41, signal amplitudes of intermediate frequency signals based on a reference light also become smaller. Accordingly, likewise, an attenuation ratio of the neutral density filter 32 that is a received light amount adjustment means is set lower than a case where the same neutral density filter is used when the amplitudes are a proper value.

When the amplitude of the amplifier 41 is set lower than a proper value, the amplitude is not properly decomposed by the A/D converter and hence, a signal amplitude equal to or less than 1 count is not detected at the time of performing the signal conversion. Accordingly, the amplitude is erroneously digitalized to 0 and hence, the detection of the signal cannot be performed whereby a limit reachable flight distance of a distance measurement light is shortened. However, this drawback can be resolved by increasing the resolution of the A/D converter in use. That is, by bringing a detection limit in a state where the amplitude is set low to a value substantially equal to a detection limit in a state where the amplitude is set to a proper value with the use of the A/D converter having high resolution.

(Modification)

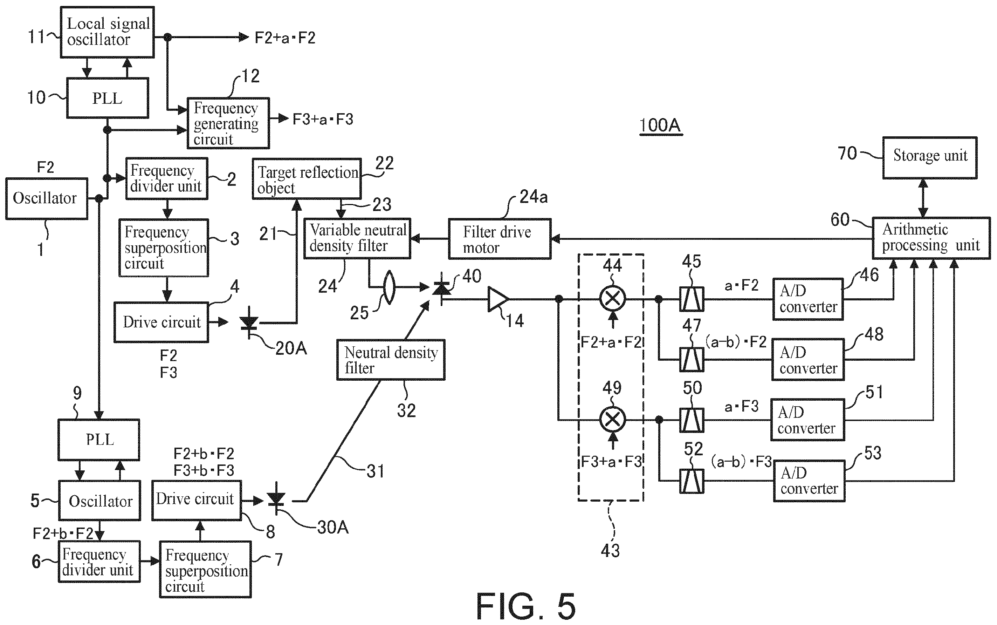

FIG. 5 is a block diagram of an electro-optical distance meter 100A according to a modification of this embodiment. The electro-optical distance meter 100A has substantially the same configuration as the electro-optical distance meter 100. However, the electro-optical distance meter 100A differs from the electro-optical distance meter 100 with respect to the point that a first light emitting element 20A and a second light emitting element 30A are not formed of a laser diode, but are formed of a light-emitting diode (LED). Further, an oscillator 1 does not oscillate at a frequency F1 that is larger than 10 MHz but oscillates at a frequency F2 that falls within a range of 10 MHz to 1 MHz. A frequency divider unit 2 divides the signal of the frequency F2 and outputs signals of a frequency F3 of 1 MHz or less. An oscillator 5 generates a signal of an adjacent modulation frequency $F2+b \cdot F2$. This signal of the adjacent modulation frequency $F2+b \cdot F2$ is subjected to frequency division by the frequency divider unit 6, and is turned into a signal of an adjacent modulation frequency $F3+b \cdot F3$. A local signal oscillator 11 generates a signal of a local frequency $F2+a \cdot F2$. This local frequency $F2+a \cdot F2$ is subjected to frequency division by the frequency generating circuit 12, and a signal of a local frequency signal $F3+a \cdot F3$ is generated.

Accordingly, a drive circuit 4 is driven by only the signals of the frequencies F2, F3, and a drive circuit 8 is driven only by the signals of the frequencies $F2+b \cdot F2$, $F3+b \cdot F3$. Received light signals by a light receiving element 40 do not include a signal derived from a signal of a frequency F1 and hence, a band filter 42 is also unnecessary. In this manner, in the case where the first light emitting element 20A and the second light emitting element 30A are formed of an LED, even when a light that is modulated with a high-frequency modulation frequency F1 is not transmitted, the stability of a signal phase is not affected and hence, the electro-optical distance meter 100A has substantially the same advantageous effects as the electro-optical distance meter 100.

Although the preferred embodiments of the present invention have been described heretofore, the above-mentioned embodiment exemplifies one example of the present invention, and these embodiments can be combined with each other based on the knowledge of a person skilled in the art, and such modes also fall within the scope of the present invention.

**EP 4 249 947 B1**

Reference Signs List

20, 20A: First light emitting diode
21: Distance measurement optical path
22: Target reflection object
23: Distance measurement optical path
24: Variable neutral density filter (received light amount adjustment means)
30, 30A: Second light emitting element
31: Reference optical path
32: Neutral density filter (received light amount adjustment means)
40: Light receiving element
41: Amplifier
43: Frequency converter group
44: First frequency converter (frequency converter)
49: Second frequency converter (frequency converter)
60: Arithmetic processing unit
100, 100A: Electro-optical distance meter

**Claims**

1. An electro-optical distance meter (100) comprising:

a first light emitting element (20) configured to transmit a light modulated with a plurality of main modulation frequencies to a distance measurement optical path along which a light travels back and forth to a target reflection object as a distance measurement light;
a second light emitting element (30) configured to transmit a light modulated with adjacent modulation frequencies close to the respective main modulation frequencies to a reference optical path as a reference light;
a first light receiving element (40) configured to receive the light emitted from the first light emitting element (20) and the light emitted from the second light emitting element (30);
a frequency converter group (43) that is connected to the first light receiving element (40) and is configured to convert received light signals based on the distance measurement light and the reference light into intermediate frequency signals; and
an arithmetic processing unit (60) configured to measure a distance to the target reflection object based on the intermediate frequency signals, wherein
the frequency converter group (43) is constituted of frequency converters (44, 49) the number of which is equal to the number of the main modulation frequencies, signals of local frequencies corresponding to the respective main modulation signals are respectively input to the respective frequency converters,
the respective local frequencies are frequencies close to both the corresponding main modulation frequencies and the corresponding adjacent modulation frequencies close to the main modulation frequencies,
each of the frequency converters (44, 49) is configured to generate a distance measurement intermediate frequency signal based on the distance measurement light and a reference intermediate frequency signal based on the reference light,
the arithmetic processing unit (60) is configured to calculate the distance to the target reflection object by subtracting the reference intermediate frequency signal from the distance measurement intermediate frequency signal,
the electro-optical distance meter (100) further comprises an amplifier (41) configured to amplify the received light signal and to input the received light signal to the frequency converter group (43);
a received light amount adjustment means (24) configured to adjust a received light amount level detected by the first light receiving element (40), and
the received light amount adjustment means (24) is a variable neutral density filter, **characterized in that**
the electro-optical distance meter (100) does not comprise a second light receiving element,
the plurality of main modulation frequencies are equal to or less than 10 MHz, and
an amplitude of the amplifier (41) is set to a value lower than a proper value at which a level of the distance measurement intermediate frequency signal becomes a minimum magnitude that satisfies a reachable limit flight distance of the distance measurement light, and

the received light amount adjustment means (24) is set such that, in a state where the amplitude is set lower than the proper value, the level of the distance measurement intermediate frequency signal is set to a value at which the level of the distance measurement intermediate frequency signal becomes the minimum magnitude that satisfies the reachable limit flight distance.

2. The electro-optical distance meter (100) according to claim 1, wherein a deviation between each of the main modulation frequencies and the local frequency corresponding to each of the main modulation frequencies is 10 times or more larger than a deviation between each of the adjacent modulation frequencies and the main modulation frequency close to the each of the adjacent modulation frequencies.

3. The electro-optical distance meter (100) according to claim 1 or 2, wherein
the attenuation ratio is set such that when an amplitude of the amplifier 41 is lowered to 1/N (N being a natural number) of a proper value, transmissivity of the variable neutral density filter 24 is increased by N times.

4. The electro-optical distance meter (100) according to any one of claims 1 to 3, wherein

the first and second light emitting elements (20A, 30A) are formed of a laser diode,
the first light emitting element (20A) is configured to transmit, in addition to the plurality of main modulation frequencies, a light modulated with a high-frequency main modulation frequency that is higher in frequency than the plurality of main modulation frequencies to the distance measurement path,
the second light emitting element (30A) is configured to transmit, in addition to the adjacent modulation frequencies close to the plurality of main modulation frequencies, a light modulated with a high-frequency adjacent modulation frequency close to the high-frequency main modulation frequency to the reference optical path, and

the electro-optical distance meter is configured such that neither a distance measurement signal based on the distance measurement light modulated with the high-frequency main modulation frequency nor a distance measurement signal based on the reference light modulated with the high-frequency adjacent modulation signal is input to the frequency converter group.

5. The electro-optical distance meter according to any one of claims 1 to 3, wherein
the first and second light emitting elements are formed of a light-emitting-diode.


**Patentansprüche**

1. Elektrooptischer Entfernungsmesser (100), der aufweist:

ein erstes lichtemittierendes Element (20), das dazu ausgebildet ist, mit einer Vielzahl von Hauptmodulationsfrequenzen moduliertes Licht auf einen optischen Entfernungsmesspfad, entlang dem sich ein Licht hin und her bewegt, zu einem Zielreflexionsobjekt als ein Entfernungsmesslicht zu übertragen;
ein zweites lichtemittierendes Element (30), das dazu ausgebildet ist, ein mit benachbarten Modulationsfrequenzen nahe den jeweiligen Hauptmodulationsfrequenzen moduliertes Licht auf einen optischen Referenzpfad als ein Referenzlicht zu übertragen;
ein erstes Lichtaufnahmeelement (40), das dazu ausgebildet ist, das von dem ersten lichtemittierenden Element (20) emittierte Licht und das von dem zweiten lichtemittierenden Element (30) emittierte Licht aufzunehmen;
eine Frequenzwandlergruppe (43), die mit dem ersten Lichtaufnahmeelement (40) verbunden ist und dazu ausgebildet ist, empfangene Lichtsignale basierend auf dem Entfernungsmesslicht und dem Referenzlicht in Zwischenfrequenzsignale umzuwandeln; und
eine arithmetische Verarbeitungseinheit (60), die dazu ausgebildet ist, eine Entfernung zu dem Zielreflexionsobjekt basierend auf den Zwischenfrequenzsignalen zu messen, wobei
die Frequenzwandlergruppe (43) aus Frequenzwandlern (44, 49) besteht, deren Anzahl gleich der Anzahl der Hauptmodulationsfrequenzen ist, wobei Signale lokaler Frequenzen, die den jeweiligen Hauptmodulationssignalen entsprechen, jeweils in die jeweiligen Frequenzwandler eingegeben werden,
die jeweiligen lokalen Frequenzen solche Frequenzen sind, die sowohl nahe den entsprechenden Hauptmodulationsfrequenzen als auch nahe den entsprechenden benachbarten Modulationsfrequenzen nahe den Hauptmodulationsfrequenzen sind,
jeder der Frequenzwandler (44, 49) dazu ausgebildet ist, ein Zwischenfrequenzsignal der Entfernungsmessung basierend auf dem Entfernungsmesslicht und ein Referenzzwischenfrequenzsignal basierend auf dem Referenzlicht zu erzeugen,

die arithmetische Verarbeitungseinheit (60) dazu ausgebildet ist, die Entfernung zu dem Zielreflexionsobjekt durch Subtraktion des Referenzzwischenfrequenzsignals von dem Zwischenfrequenzsignal der Entfernungsmessung zu berechnen,

der elektrooptische Entfernungsmesser (100) ferner aufweist

einen Verstärker (41), der dazu ausgebildet ist, das empfangene Lichtsignal zu verstärken und das empfangene Lichtsignal in die Frequenzwandlergruppe (43) einzugeben;

eine Einstellvorrichtung (24) für eine empfangene Lichtmenge, die dazu ausgebildet ist, einen von dem ersten Lichtaufnahmeelement (40) erfasste Lichtmengenpegel einzustellen, und

wobei die Einstellvorrichtung (24) für eine empfangene Lichtmenge ein variabler Neutraldichtefilter ist, **dadurch gekennzeichnet ,dass**

der elektrooptische Entfernungsmesser (100) kein zweites Lichtaufnahmeelement aufweist,

die Vielzahl von Hauptmodulationsfrequenzen gleich oder kleiner als 10 MHz sind, und

eine Amplitude des Verstärkers (41) auf einen Wert eingestellt ist, der kleiner als ein richtiger Wert ist, bei dem ein Pegel des Zwischenfrequenzsignals der Entfernungsmessung eine Mindestgröße annimmt, die eine erreichbare Grenzflugentfernung des Entfernungsmesslichts erfüllt, und

die Einstellvorrichtung (24) für eine empfangene Lichtmenge so eingestellt ist, dass in einem Zustand, in dem die Amplitude niedriger als der richtige Wert eingestellt ist, der Pegel des Zwischenfrequenzsignals der Entfernungsmessung auf einen Wert eingestellt ist, bei dem der Pegel des Zwischenfrequenzsignals der Entfernungsmessung die Mindestgröße annimmt, welche die erreichbare Grenzflugentfernung erfüllt.

2. Elektrooptischer Entfernungsmesser (100) nach Anspruch 1, wobei eine Abweichung zwischen jeder der Hauptmodulationsfrequenzen und der lokalen Frequenz, die jeder der Hauptmodulationsfrequenzen entspricht, 10 Mal oder mehr größer ist als eine Abweichung zwischen jeder der benachbarten Modulationsfrequenzen und der Hauptmodulationsfrequenz nahe jeder der benachbarten Modulationsfrequenzen.

3. Elektrooptischer Entfernungsmesser (100) nach Anspruch 1 oder 2, wobei das Dämpfungsverhältnis so eingestellt ist, dass, wenn eine Amplitude des Verstärkers 41 auf 1/N (N ist eine natürliche Zahl) eines richtigen Werts verringert wird, die Durchlässigkeit des variablen Neutraldichtefilters 24 um das N-fache erhöht wird.

4. Elektrooptischer Entfernungsmesser (100) nach einem der Ansprüche 1 bis 3, wobei

das erste und das zweite lichtemittierende Element (20A, 30A) aus einer Laserdiode ausgebildet sind,

das erste lichtemittierende Element (20A) dazu ausgebildet ist, zusätzlich zu der Vielzahl von Hauptmodulationsfrequenzen, ein Licht, das mit einer hochfrequenten Hauptmodulationsfrequenz moduliert ist, deren Frequenz höher ist als die der Vielzahl von Hauptmodulationsfrequenzen, zum Entfernungsmesspfad zu übertragen,

das zweite lichtemittierende Element (30A) dazu ausgebildet ist, zusätzlich zu den benachbarten Modulationsfrequenzen nahe der Vielzahl von Hauptmodulationsfrequenzen, ein Licht, das mit einer hochfrequenten benachbarten Modulationsfrequenz nahe der hochfrequenten Hauptmodulationsfrequenz moduliert ist, auf den optischen Referenzpfad zu übertragen, und

der elektrooptische Entfernungsmesser so ausgebildet ist, dass weder ein Entfernungsmesssignal basierend auf dem Entfernungsmesslicht, das mit der hochfrequenten Hauptmodulationsfrequenz moduliert ist, noch ein Entfernungsmesssignal basierend auf dem Referenzlicht, das mit dem hochfrequenten benachbarten Modulationssignal moduliert ist, in die Frequenzwandlergruppe eingegeben wird.

5. Elektrooptischer Entfernungsmesser nach einem der Ansprüche 1 bis 3, wobei das erste und das zweite lichtemittierende Element aus einer Leuchtdiode ausgebildet sind.

## Revendications

1. Appareil électro-optique de mesure de distance (100), comprenant :

un premier élément électroluminescent (20) configuré pour transmettre une lumière modulée avec une pluralité de fréquences de modulation principales vers un trajet optique de mesure de distance le long duquel une lumière se déplace en va-et-vient vers un objet de réflexion cible en tant que lumière de mesure de distance ;

un second élément électroluminescent (30) configuré pour transmettre une lumière modulée avec des fréquences de modulation adjacentes proches des fréquences de modulation principales respectives vers un trajet optique de référence en tant que lumière de référence ;

un premier élément de réception de lumière (40) configuré pour recevoir la lumière émise par le premier élément électroluminescent (20) et la lumière émise par le second élément électroluminescent (30) ;

un groupe de convertisseurs de fréquence (43) qui est connecté au premier élément de réception de lumière (40) et est configuré pour convertir en signaux de fréquence intermédiaire des signaux de lumière reçus sur la base de la lumière de mesure de distance et de la lumière de référence ; et

une unité de traitement arithmétique (60) configurée pour mesurer une distance jusqu'à l'objet de réflexion cible sur la base des signaux de fréquence intermédiaire, dans lequel :

le groupe de convertisseurs de fréquence (43) est constitué de convertisseurs de fréquence (44, 49) dont le nombre est égal au nombre des fréquences de modulation principales, des signaux de fréquences locales correspondant aux signaux de modulation principaux respectifs sont respectivement entrés dans les convertisseurs de fréquence respectifs,

les fréquences locales respectives sont des fréquences proches à la fois des fréquences de modulation principales correspondantes et des fréquences de modulation adjacentes correspondantes proches des fréquences de modulation principales,

chacun des convertisseurs de fréquence (44, 49) est configuré pour générer un signal de fréquence intermédiaire de mesure de distance sur la base de la lumière de mesure de distance, et un signal de fréquence intermédiaire de référence sur la base de la lumière de référence,

l'unité de traitement arithmétique (60) est configurée pour calculer la distance jusqu'à l'objet de réflexion cible en soustrayant le signal de fréquence intermédiaire de référence du signal de fréquence intermédiaire de mesure de distance,

l'appareil électro-optique de mesure de distance (100) comprend en outre :

un amplificateur (41) configuré pour amplifier le signal de lumière reçu et pour entrer le signal de lumière reçu dans le groupe de convertisseurs de fréquence (43) ;

des moyens d'ajustement de quantité de lumière reçue (24) configurés pour ajuster un niveau de quantité de lumière reçue détecté par le premier élément de réception de lumière (40), et

les moyens d'ajustement de quantité de lumière reçue (24) sont un filtre à densité neutre (filtre ND) variable, **caractérisé en ce que**

l'appareil électro-optique de mesure de distance (100) ne comprend pas de second élément de réception de lumière,

la pluralité des fréquences de modulation principales sont inférieures ou égales à 10 MHz, et

une amplitude de l'amplificateur (41) est réglée à une valeur inférieure à une valeur appropriée à laquelle un niveau du signal de fréquence intermédiaire de mesure de distance devient une amplitude minimale qui répond à une distance limite accessible de la lumière de mesure de distance, et

les moyens d'ajustement de quantité de lumière reçue (24) sont réglés de façon telle que, dans un état dans lequel l'amplitude est réglée pour être inférieure à la valeur appropriée, le niveau du signal de fréquence intermédiaire de mesure de distance est réglé sur une valeur à laquelle le niveau du signal de fréquence intermédiaire de mesure de distance devient la grandeur minimale qui satisfait à la distance limite accessible.

2. Appareil électro-optique de mesure de distance (100) selon la revendication 1, dans lequel un écart entre chacune des fréquences de modulation principales et la fréquence locale correspondant à chacune des fréquences de modulation principales est 10 fois supérieur, ou plus, à un écart entre chacune des fréquences de modulation adjacentes et la fréquence de modulation principale proche de chacune des fréquences de modulation adjacentes.

3. Appareil électro-optique de mesure de distance (100) selon la revendication 1 ou 2, dans lequel
le rapport d'atténuation est réglé de façon telle que lorsqu'une amplitude de l'amplificateur 41 est abaissée à 1/N (N étant un nombre naturel) d'une valeur appropriée, la transmissivité du filtre ND variable 24 est augmentée de N fois.

4. Appareil électro-optique de mesure de distance (100) selon l'une quelconque des revendications 1 à 3, dans lequel

les premier et second éléments électroluminescents (20A, 30A) sont formés d'une diode laser,
le premier élément électroluminescent (20A) est configuré pour transmettre vers le trajet de mesure de distance, en plus de la pluralité de fréquences de modulation principales, une lumière modulée avec une fréquence de modulation principale haute fréquence, dont la fréquence est plus élevée que la pluralité de fréquences de modulation principales,

le second élément électroluminescent (30A) est configuré pour transmettre vers le trajet optique de référence, en plus des fréquences de modulation adjacentes proches de la pluralité de fréquences de modulation principales, une lumière modulée avec une fréquence de modulation adjacente haute fréquence proche de la fréquence de modulation principale haute fréquence, et

l'appareil électro-optique de mesure de distance est configuré de façon telle que ni un signal de mesure de distance basé sur la lumière de mesure de distance modulée avec la fréquence de modulation principale haute fréquence ni un signal de mesure de distance basé sur la lumière de référence modulée avec le signal de modulation adjacent haute fréquence n'est entré dans le groupe de convertisseurs de fréquence.

5. Appareil de mesure de distance électro-optique selon l'une quelconque des revendications 1 à 3, dans lequel les premier et second éléments électroluminescents sont formés d'une diode électroluminescente.

**FIG. 1**

FIG. 2

FIG. 3A   FIG. 3B   FIG. 3C

Decrease amplitude

Adjust received light amount

| | a>0, b>0<br>(a=α,b=β) | a>0, b<0<br>(a=α,b=−β) | a<0, b>0<br>(a=−α,b=β) | a<0, b<0<br>(a=−α,b=−β) |
|---|---|---|---|---|
| Modulation frequency of first light emitting element 20 (main modulation frequency) | F2 | F2 | F2 | F2 |
| Modulation frequency of second light emitting element 30 (adjacent modulation frequency) | $F2+\beta \cdot F2$ | $F2+\beta \cdot F2$ | $F2-\beta \cdot F2$ | $F2-\beta \cdot F2$ |
| Local frequency | $F2+\alpha \cdot F2$ | $F2-\alpha \cdot F2$ | $F2+\alpha \cdot F2$ | $F2-\alpha \cdot F2$ |
| Intermediate frequency after band filter 45 | $\alpha \cdot F2$ | $\alpha \cdot F2$ | $\alpha \cdot F2$ | $\alpha \cdot F2$ |
| Intermediate frequency after band filter 47 | $(\alpha-\beta) \cdot F2$ | $(\alpha+\beta) \cdot F2$ | $(\alpha+\beta) \cdot F2$ | $(\alpha-\beta) \cdot F2$ |

$$\alpha=|a|, \beta=|b|$$

FIG. 4

FIG. 5

EP 4 249 947 B1

**EP 4 249 947 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011013068 A

- US 2012013888 A1